# EUROPÄISCHE PATENTSCHRIFT

(11) **EP 3 291 375 B1**
(45) Veröffentlichungstag und Bekanntmachung des Hinweises auf die Patenterteilung: **10.04.2019**
(21) Anmeldenummer: 16306104.7
(22) Anmeldetag: 01.09.2016
(51) Int. Cl.: H01R 4/22, H01R 4/62, H01R 43/02, B23K 20/12, B23K 20/24, B23K 101/32

(54) **VERFAHREN ZUM ELEKTRISCH LEITENDEN VERBINDEN VON ELEKTRISCHEN LEITERN**
METHOD FOR ELECTRICALLY CONDUCTIVE CONNECTION OF ELECTRICAL CONDUCTORS
PROCÉDÉ DE CONNEXION ÉLECTRIQUE DE CONDUCTEURS ÉLECTRIQUES

(43) Veröffentlichungstag der Anmeldung: 07.03.2018
(73) Patentinhaber: Nexans, 92400 Courbevoie (FR)
(72) Erfinder: KARCHS, Roy, 92637 WEIDEN (DE); DONATE, Hans Jürgen, 92640 Vohenstrauss (DE); STEINBERG, Helmut, 92721 Störnstein (DE)
(74) Vertreter: Laget, Jean-Loup

(56) Entgegenhaltungen:
- EP-A1- 2 053 694
- EP-A1- 2 410 612
- EP-A1- 2 672 569
- EP-A1- 2 735 397
- EP-A1- 2 797 171
- EP-A1- 2 887 459
- DE-A1-102006 021 422
- US-A- 3 826 000

## Beschreibung

Die Erfindung bezieht sich auf ein Verfahren zum elektrisch leitenden Verbinden von mindestens zwei elektrischen Litzenleitern, die aus einer Vielzahl von zu einer Einheit zusammengefaßten Einzeldrähten bestehen, mit einem weiterführenden elektrischen Einzelleiter (EP 2 797 171 A1).

Mit einem solchen Verfahren kann eine Anordnung hergestellt werden, welche beispielsweise zum gemeinsamen Anschluß von mindestens zwei elektrischen Leitern eines Kabelsatzes für elektrische Geräte und Kraftfahrzeuge an einen zu einem gemeinsamen Potential, wie beispielsweise "Masse", führenden Leiter eingesetzt werden kann.

Aus der EP 2 053 694 A1 gehen eine Erdungsstruktur und ein Erdungsverfahren für geschirmte Drähte hervor. In der Struktur sind geschirmte Leiter eingesetzt, die neben isolierten Drähten einen Erdungsdraht haben. Die Erdungsdrähte der geschirmten Leiter sind in einem Crimpverbinder miteinander verbunden, in dem auch ein Erdleiter mit eingecrimpt ist. Der Crimpverbinder ist von einer zylindrischen Kappe aus Isoliermaterial umgeben. Der Erdleiter ist an einen Erdungspunkt angeschlossen. Es werden also in mehreren geschirmten Leitern vorhandene Erdungsdrähte an einen gemeinsamen Erdungspunkt angeschlossen.

Die US 3 826 000 A beschreibt ein Verfahren, mit dem am Ende eines elektrischen Aluminiumleiters ein Kontaktelement angeformt werden kann. Zur Erzeugung des Kontaktelements an der Spitze des Leiters wird das Ende desselben vertikal nach unten weisend festgelegt und mittels einer Wolfram-Elektrode erwärmt bzw. geschmolzen. Dabei wird von einer Schweißmaschine ein Schweißbogen mit ausreichend hoher Spannung erzeugt. Es entsteht bei diesem Verfahren ein birnenförmiger Tropfen am stirnseitigen Ende des Leiters. Der Tropfen wandert, während er größer wird, entlang des Leiters nach oben. Dabei wird der Abstand zur Elektrode nach und nach vergrößert. Wenn dieser Abstand für den Schweißbogen zu groß wird, dann wird derselbe gelöscht. Das Material des Tropfens wird dann gekühlt und es ergibt sich ein solides, metallurgisch homogenes Klümpchen. Das Klümpchen wird anschließend mechanisch zu einem Kontaktelement verformt, das unterschiedlichste Formen haben kann.

DE 10 2006 021422 A1 bezieht sich auf ein Verfahren zum Herstellen eines Durchgangs- oder Endknotens aus elektrischen Leitern wie Litzen durch Kompaktieren und anschließendes Verschweißen der Leiter mittels Ultraschall in einem Verdichtungsraum einer Ultraschallschweißmaschine, wobei die Leiter in eine Hülse eingebracht und anschließend die Hülse mit den Leitern im Verdichtungsraum zu dem End- oder Durchgangsknoten verschweißt werden.

Bei dem aus der eingangs erwähnten EP 2 797 171 A1 beschriebenen Verfahren werden mindestens zwei aus Kupfer bestehende Litzenleiter getrennt voneinander an ein aus elektrisch leitendem Material bestehendes, scheibenartiges Bauteil elektrisch leitend angeschlossen. An das Bauteil wird andererseits ein weiterführender elektrischer Leiter angeschlossen, der im Einsatzfall mit einem für die beiden Litzenleiter gemeinsamen Potential verbunden ist, beispielsweise mit "Masse". Eine entsprechende Anordnung kann problemlos und störungsfrei hergestellt werden, solange die Litzenleiter beispielsweise aus Kupfer oder einer Kupferlegierung bestehen. Probleme ergeben sich aber dann, wenn Litzenleiter verwendet werden, die Aluminium enthalten bzw. aus Aluminium bestehen. Sie werden im Folgenden, der Einfachheit halber, als "Aluminiumleiter" bezeichnet.

Elektrische Aluminiumleiter werden insbesondere aus Gewichts- und Kostengründen vermehrt als Ersatz für Kupferleiter verwendet. Die geringere elektrische Leitfähigkeit des Aluminiums gegenüber Kupfer spielt für die meisten Anwendungen keine Rolle. Probleme ergeben sich aber beim Anbringen von Kontaktteilen an den Leitern, da Aluminiumleiter von einer elektrisch schlecht leitenden Oxidschicht umgeben sind. Dieser Mangel macht sich besonders bei aus einer Vielzahl von Einzeldrähten bestehenden Litzenleitern bemerkbar, von denen jeder von einer ohne Sonderbehandlung nicht zu vermeidenden Oxidschicht umgeben ist.

Der Erfindung liegt die Aufgabe zugrunde, das eingangs geschilderte Verfahren so zu gestalten, dass eine sichere Kontaktierung auch für Aluminium enthaltende Litzenleiter gewährleistet ist.

Diese Aufgabe wird gemäß der Erfindung dadurch gelöst,
- dass zunächst an den stirnseitigen Enden von zwei Aluminium enthaltenden Litzenleitern durch Aufschmelzen des Materials derselben jeweils ein mit allen Einzeldrähten des Litzenleiters verbundener Kontaktkörper erzeugt wird,
- dass danach auf die stirnseitigen Enden der beiden Litzenleiter jeweils eine aus Metall bestehende, topfartige Kappe mit dichter Anlage am jeweiligen Kontaktkörper aufgesteckt und mit demselben elektrisch leitend verbunden wird und
- dass anschließend die beiden Kappen durch ein aus Metall bestehendes Verbindungselement elektrisch leitend miteinander verbunden werden, an das der Einzelleiter elektrisch leitend angeschlossen wird.

Bei Einsatz dieses Verfahrens wird zur Herstellung eines Kontaktkörpers zunächst die Stirnfläche eines jeden Litzenleiters durch eine auf dieselbe einwirkende Wärmequelle so hoch erwärmt bzw. erhitzt, bis alle Einzeldrähte an der Spitze des Litzenleiters einschließlich der dieselben umgebenden Oxidschichten geschmolzen sind. Die dabei aufgebrachte Temperatur kann mit Vorteil mindestens 2000 °C betragen. Das geschmolzene Aluminium verbindet sich dadurch zu einem zusammenhängenden Kontaktkörper, der ausschließlich aus Aluminium besteht, und der mit dem Aluminium aller Einzeldrähte des Aluminiumleiters verbunden ist. Das Material der Oxidschichten der Einzeldrähte wird durch die hohe Temperatur weggeschmolzen bzw. gegebenenfalls so verlagert, dass es in dem aus Aluminium bestehenden Kontaktkörper nicht enthalten ist. Nach dem Abkühlen des Endes des Aluminiumleiters ist an dessen Spitze eine elektrisch wirksame Kontaktstelle geschaffen, die aus dem kompakten und homogenen, nur Aluminium enthaltenden Kontaktkörper besteht. Es kann dadurch auf einfache Art und Weise eine elektrisch leitende Verbindung zu einem beispielsweise aus Kupfer bestehenden Kontaktelement hergestellt werden, in der sichergestellt ist, dass der ganze elektrisch leitende Querschnitt des Aluminiumleiters erfaßt ist.

Die ein elektrisches Kontaktelement darstellende, topfartige Kappe hat einen Boden und eine von demselben abstehende, zylindrische Wandung. Sie liegt in Montageposition dicht am Kontaktkörper an und umschließt das Ende des Aluminiumleiters. Die Kappe kann mit einem Verfahren an dem jeweiligen Kontaktkörper eines Aluminiumleiters elektrisch leitend festgelegt werden, wie es beispielsweise aus der EP 2 735 397 A1 hervorgeht. Bei diesem Verfahren wird ein Werkzeug eingesetzt, das mit Vorteil bereits beim Anlegen an die jeweilige Kappe in Rotation versetzt ist. Es kann aber auch später in Rotation versetzt werden. Das Werkzeug rotiert bei Durchführung des Verfahrens mit hoher Drehzahl, so dass infolge der durch Reibung erzeugten hohen Temperatur das Aluminium des Aluminiumleiters in einen teigigen Zustand übergeht. Das Material der Kappe, die mit Vorteil aus Kupfer besteht, wird bei diesem Vorgang zwar ebenfalls erwärmt, aber nur so weit, dass ihre Wandung ohne Zerstörung in Richtung des Aluminiumleiters eingedrückt werden kann. Wenn die gewünschte Temperatur erreicht ist, ist das Aluminium des Aluminiumleiters so weitgehend erweicht, dass es sich mit der Kappe stoffschlüssig verbindet bzw. durch Diffusion mit derselben verschweißt. Im Ergebnis ist auf diese Art und Weise am Ende jedes Aluminiumleiters eine Kappe angebracht, die über den Kontaktkörper jeweils elektrisch leitend mit allen Einzeldrähten des Aluminiumleiters verbunden ist.

Mindestens zwei auf diese Art und Weise an ihren Enden mit einer Kappe bestückte Aluminiumleiter werden durch ein aus Metall, vorzugsweise aus Kupfer, bestehendes Verbindungselement elektrisch leitend miteinander verbunden. Dazu kann ein beispielsweise stegartig ausgeführtes Verbindungselement mit Vorteil mit den Kappen verschweißt werden. An das Verbindungselement kann abschließend der Einzelleiter angeschlossen werden, der im Montagefall an seinem fernen Ende mit einem für die Aluminiumleiter gemeinsamen Potential verbunden ist. Die beiden Aluminiumleiter sind dann gemeinsam an das Potential angeschlossen. Das gilt auch für mehr als zwei Aluminiumleiter, die alle über ihre Kappen durch nur ein Verbindungselement miteinander verbunden sind, an welches der Einzelleiter angeschlossen ist. Der Einzelleiter könnte auch vor dem Verbinden des Verbindungselements mit den Kappen der Aluminiumleiter bereits an dasselbe angeschlossen sein.

Das Verfahren nach der Erfindung wird anhand der Zeichnungen in einem Ausführungsbeispiel erläutert.

Es zeigen:
Fig. 1 schematisch einen Kabelbaum für ein elektrisches Gerät.
Fig. 2 bis 4 unterschiedliche Stadien bei der Bearbeitung eines Aluminiumleiters mit dem Verfahren nach der Erfindung.
Fig. 5 eine Verbindungsstelle zwischen zwei Aluminiumleitern.

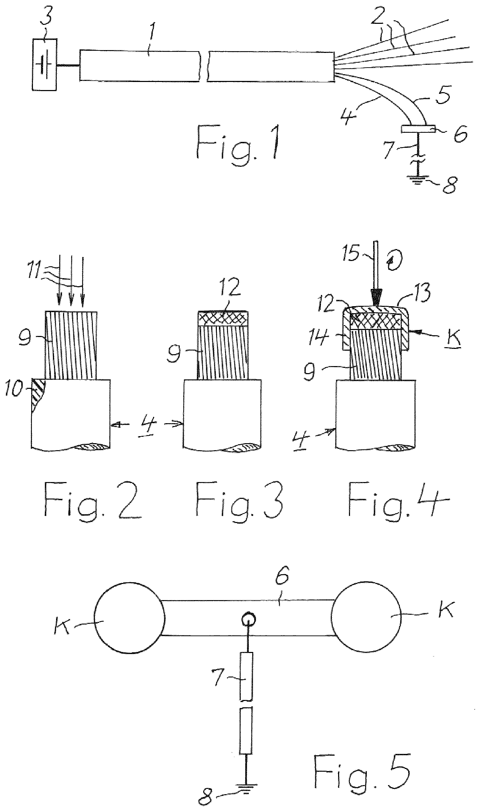

In Fig. 1 ist schematisch ein Kabelbaum 1 dargestellt, in dem eine Anzahl von aus isolierten Leitern bestehende elektrische Adern 2 zu einer Einheit zusammengefaßt ist. Ein solcher Kabelbaum 1 kann beispielsweise in einem Kraftfahrzeug angeordnet sein. Er dient dann zur Stromversorgung von Verbrauchern desselben und zur Signalübertragung an entsprechende Geräte. Der Kabelbaum 1 ist an eine Spannungsquelle 3 angeschlossen. Die Adern 2 führen zu nicht mit dargestellten Verbrauchern und Geräten des Kraftfahrzeugs.

Die Leiter der Adern 2 bestehen aus elektrisch gut leitendem Material, wie Kupfer und Aluminium, einschließlich Legierungen derselben. Zumindest zwei der Adern 2 sind als aus Aluminium bzw. aus einer Aluminiumlegierung bestehende Litzenleiter mit einer Vielzahl von zu einer Einheit zusammengefaßten Einzeldrähten ausgeführt. Diese beiden Adern 4 und 5 sind an ein Verbindungselement 6 angeschlossen, das durch einen elektrischen Einzelleiter 7 mit einem Massepunkt 8 verbunden ist. Die Leiter der beiden Adern 4 und 5 werden im Folgenden weiter als Aluminiumleiter bezeichnet.

Die Behandlung eines Aluminiumleiters mit dem Verfahren nach der Erfindung wird anhand der Fig. 2 bis 4 erläutert, in denen das Ende eines Aluminiumleiters 9 dargestellt ist, der beispielsweise zur Ader 4 gehört:
Die Ader 4 wird zunächst an ihrem einen Ende von ihrer Isolierung 10 befreit, also abisoliert. An dem dadurch freigelegten Aluminiumleiter 9 kann mit Vorteil ein Halter angebracht werden, welcher die Einzeldrähte desselben zusammenhält. Danach wird die Stirnfläche des Aluminiumleiters 9 erhitzt, und zwar entsprechend Fig. 2 durch in Richtung der Pfeile 11 aus einer Wärmequelle aufgebrachte Wärme bzw. Hitze.

Als Wärmequelle können beispielsweise ein Plasmalichtbogen, ein Laserstrahl, ein Elektronenstrahl, eine WIG (Wolfram-Inert-Gas)-Stromquelle oder eine MSG (Metall-Schutz-Gas)-Stromquelle dienen. Es wird eine Temperatur von mindestens 2000 °C auf die Stirnfläche des Aluminiumleiters 9 aufgebracht, bei der die Oxidschichten desselben quasi verdampft werden. Die von den unterschiedlichen Wärmequellen erzeugten Temperaturen können bis zu 3500 °C betragen. Dabei reicht eine sehr kurzzeitige Erwärmung der Stirnfläche des Aluminiumleiters 9 von beispielsweise 2 Sekunden aus.

Die Stirnfläche des Aluminiumleiters 9 wird dadurch so hoch erwärmt bzw. erhitzt, dass alle Einzeldrähte an der Spitze desselben einschließlich der dieselben umgebenden Oxidschichten geschmolzen sind. Das geschmolzene Aluminium verbindet sich dadurch zu einem in Fig. 3 dargestellten, zusammenhängenden Kontaktkörper 12, der ausschließlich aus Aluminium besteht, und der mit dem Aluminium aller Einzeldrähte des Aluminiumleiters 9 verbunden ist. Das Material der Oxidschichten der Einzeldrähte wird durch die hohe Temperatur weggeschmolzen bzw. so verlagert, dass es in dem aus Aluminium bestehenden Kontaktkörper 12 nicht enthalten ist.

Nach dem Abkühlen des Endes des Aluminiumleiters 9 wird auf dessen Ende eine beispielsweise aus Kupfer bestehende, topfartige Kappe K aufgesetzt. Die Kappe K hat einen Boden 13 und eine von demselben abstehende zylindrische Wandung 14. Sie wird so auf die Spitze des Aluminiumleiters 9 aufgesetzt, dass ihr Boden 13 dicht am Kontaktkörper 12 anliegt. Die Wandung 14 der Kappe K umgibt in der aus Fig. 4 ersichtlichen Montageposition das Ende des Aluminiumleiters 9. An den Boden 13 der Kappe K wird danach ein durch einen Pfeil angedeutetes Werkzeug 15 angelegt, das um seine Achse drehbar ist. Das Werkzeug 15 kann vor dem Anlegen an die Kappe K, aber auch danach in Rotation versetzt werden.

Das Werkzeug 15 kann beispielsweise durch einen Elektromotor um seine Achse in Drehung versetzt werden. Es wird mit anhaltendem Druck gegen den Boden 13 der Kappe K gedrückt, so dass das Material derselben durch Reibung erwärmt wird. Diese Erwärmung wird von der Kappe K auf den am Boden 13 derselben anliegenden Kontaktkörper 12 übertragen. Das Verfahren wird bei ausreichend hoher Drehzahl des Werkzeugs 15 solange durchgeführt, bis das Material des Kontaktkörpers 12 in einen teigigen Zustand übergegangen ist, so dass es sich mit der Kappe K stoffschlüssig verbindet bzw. durch Diffusion mit derselben verschweißt. Die entsprechende Temperatur liegt unterhalb von 500 °C, also relativ weit unterhalb der Schmelztemperatur von Aluminium, die etwa 658 °C beträgt.

Das gleiche Verfahren wird analog für die Ader 5 durchgeführt, deren Aluminiumleiter danach ebenfalls mit einer Kappe K versehen ist. Das gilt auch für weitere Adern mit einem Aluminiumleiter, die an das gemeinsame Verbindungselement 6 angeschlossen werden sollen. Solche Adern müssen nicht zum Kabelbaum 1 gehören. Sie können auch als Einzeladern ausgeführt sein, die unabhängig vom Kabelbaum 1 beispielsweise in einem Kraftfahrzeug angebracht sind.

Im Folgenden wird das Verfahren nur für die beiden Adern 4 und 5 weiter beschrieben, die gemeinsam an den Massepunkt 6 angeschlossen werden sollen:
Die beiden Adern 4 und 5, deren Aluminiumleiter 9 jeweils mit einer Kappe K abgeschlossen sind, werden nebeneinander positioniert. Die beiden Kappen K werden dann durch das aus Metall, vorzugsweise aus Kupfer, bestehende Verbindungselement 6 elektrisch leitend miteinander verbunden. Das Verbindungselement 6 kann dazu mit Vorteil mit den beiden Kappen K verschweißt werden. Es ist im dargestellten Ausführungsbeispiel als stegartiger Streifen ausgeführt. Wenn mehr als zwei Adern an ein Verbindungselement 6 angeschlossen werden sollen, kann dasselbe auch eine andere geometrische Form haben.

Mittels des Verbindungselements 6 können die beiden Adern 4 und 5 mit dem Massepunkt 8 verbunden werden. Dazu wird der Einzelleiter 7 elektrisch leitend an das Verbindungselement 6 angeschlossen, der mit seinem fernen Ende mit dem Massepunkt 8 verbunden ist.

## Patentansprüche

1. Verfahren zum elektrisch leitenden Verbinden von mindestens zwei elektrischen Litzenleitern (4, 5), die aus einer Vielzahl von zu einer Einheit zusammengefaßten Einzeldrähten bestehen, mit einem weiterführenden elektrischen Einzelleiter (7) **dadurch gekennzeichnet,**
- **dass** zunächst an den stirnseitigen Enden von zwei Aluminium enthaltenden Litzenleitern (9) durch Aufschmelzen des Materials derselben jeweils ein mit allen Einzeldrähten des Litzenleiters (9) verbundener Kontaktkörper (12) erzeugt wird,
- **dass** danach auf die stirnseitigen Enden der beiden Litzenleiter (9) jeweils eine aus Metall bestehende, topfartige Kappe (K) mit dichter Anlage am jeweiligen Kontaktkörper (12) aufgesteckt und mit demselben elektrisch leitend verbunden wird und
- **dass** anschließend die beiden Kappen (K) durch ein aus Metall bestehendes Verbindungselement (6) elektrisch leitend miteinander verbunden werden, an das der Einzelleiter (7) elektrisch leitend angeschlossen wird.

2. Verfahren nach Anspruch 1, **dadurch gekennzeichnet, dass** der Kontaktkörper (12) jeweils durch Erwärmung der Stirnflächen der Litzenleiter (9) auf eine Temperatur von mindestens 2000 °C erzeugt wird.

3. Verfahren nach Anspruch 1 oder 2, **dadurch gekennzeichnet,**
- **dass** an die jeweils auf einen Litzenleiter (9) aufgesteckten Kappen (K) an deren Außenseite ein sich drehendes Werkzeug (15) mit Druck so lange angelegt wird, bis das Material des jeweiligen Kontaktkörpers (12) erweicht und durch Diffusion mit der Kappe (K) verschweißt ist, und
- **dass** das Werkzeug (15) danach von der jeweiligen Kappe (K) entfernt wird.

## Claims

1. A method for the electrically conductive connection of at least two electrical stranded conductors (4, 5),
which consist of a plurality of individual wires combined to form a unit, with a further electrical individual conductor (7),
**characterized in**
- **that** initially in each case a contact body (12) connected to all of the individual wires of the stranded conductor (9) is generated at the front ends of two aluminum-containing stranded conductors (9) by melting the material of the same,
- **that** then in each case a cup-like cap (K), consisting of metal, with a tight contact with the respective contact body (12) is mounted on the front ends of the two stranded conductors (9) and is electrically conductively connected with the same and
- **that** subsequently the two caps (K) are connected electrically conductively with each other by a connecting element (6) consisting of metal, to which the individual conductor (7) is electrically conductively connected.

2. A method according to Claim 1, **characterized in that** the contact body (12) is generated in each case by heating the end faces of the stranded conductor (9) to a temperature of at least 2000 °C.

3. A method according to Claim 1 or 2, **characterized in**
- **that** a rotating tool (15) is applied with pressure to the caps (K) mounted in each case onto the stranded conductor (9) on the outer side thereof, until the material of the respective contact body (12) softens and is welded with diffusion to the cap (K), and
- **that** the tool (15) is then removed from the respective cap (K).

## Revendications

1. Procédé de liaison électro-conductrice d'au moins deux conducteurs toronnés (4, 5), qui sont constitués d'une pluralité de fils individuels regroupés en une unité, avec un conducteur individuel (7) conduisant plus loin,
**caractérisé en ce que**
- au niveau des extrémités frontales de deux conducteurs toronnés (9) contenant de l'aluminium, est d'abord réalisé, par fusion du matériau de ceux-ci, un corps de contact (12) relié avec tous les fils individuels du conducteur toronné (9),
- ensuite, sur chacune des extrémités frontales des deux conducteurs toronnés (9) un capuchon (K) métallique en forme de cloche avec un appui étanche contre le corps de contact (12) correspondant est emboîté et est relié de manière électro-conductrice avec celui-ci et
- les deux capuchons (K) sont ensuite reliés de manière électro-conductrice entre eux à l'aide d'un élément de liaison (6) métallique, auquel le conducteur individuel (7) est raccordé de manière électro-conductrice.

2. Procédé selon la revendication 1, **caractérisé en ce que** le corps de contact (12) est réalisé par le chauffage des faces frontales des conducteurs toronnés (9) à une température d'au moins 2000 °C.

3. Procédé selon la revendication 1 ou 2, **caractérisé en ce que**
- sur chacun des capuchons (K) emboîtés sur un conducteur toronné (9), sur son côté externe, un outil rotatif (15) est appuyé avec une pression jusqu'à ce que le matériau du corps de contact (12) correspondant se ramollisse et soit soudé par la diffusion avec le capuchon (K) et
- l'outil (15) est ensuite retiré du capuchon (K) correspondant.
